# EUROPÄISCHE PATENTANMELDUNG

(11) **EP 1 302 885 A2**
(43) Veröffentlichungstag der Anmeldung: **16.04.2003**
(21) Anmeldenummer: 02022991.0
(22) Anmeldetag: 15.10.2002
(51) Int. Cl.: G06F 17/60

(54) **Verfahren zur Inanspruchnahme eines Dienstes durch einen Abnehmer**

(30) Priorität: 15.10.2001 DE 10150812
(71) Anmelder: BetaResearch GmbH, 85774 Unterföhring (DE)
(72) Erfinder: Barth, Ingo, Dr., 85774 Unterföhring (DE)
(74) Vertreter: Heselberger, Johannes

(57) **Zusammenfassung**

Verfahren zum Registrieren eines Abnehmers für eine Inanspruchnahme wenigstens eines Dienstes eines Dienstanbieters, mit den Schritten:
Übertragen von Registrierungsdaten von dem Abnehmer an einen Metadienstanbieter, wobei die Registrierungsdaten erste Identifikationsdaten aufweisen und wobei die Registrierungsdaten ferner wenigstens Dienstanmeldedaten aufweisen, um den Abnehmer bei dem Dienstanbieter für den Dienst anzumelden, die den ersten Identifikationsdaten fest zugeordnet sind; und Speichern der Registrierungsdaten bei dem Metadienstanbieter.

Ferner: Verfahren zum Anmelden eines Abnehmers für eine Inanspruchnahme wenigstens eines Dienstes eines Dienstanbieters, mit den Schritten:
Übertragen von Abnehmerdaten von dem Abnehmer an einen Metadienstanbieter, wobei die Abnehmerdaten zweite Identifikationsdaten aufweisen, die zum Vergleich mit bei dem Metadienstanbieter gespeicherten ersten Identifikationsdaten vorgesehen sind, und wobei die Abnehmerdaten ferner Wahldaten aufweisen, um einen Dienst zu wählen, für den der Abnehmer bei dem Metadienstanbieter registriert ist; und
Übertragen von Dienstanmeldedaten des den Wahldaten entsprechenden Dienstes von dem Metadienstanbieter an den Dienstanbieter des gewählten Dienstes, um den Abnehmer bei dem Dienstanbieter für den gewählten Dienst anzumelden, sofern die zweiten Identifikationsdaten mit den ersten Identifikationsdaten soweit übereinstimmen, dass eine Zuordnung der Identifikationsdaten zu den Dienstanmeldedaten erkennbar ist.

## Beschreibung

Die Erfindung betrifft ein Verfahren zum Registrieren eines Abnehmers für eine Inanspruchnahme wenigstens eines Dienstes eines Dienstanbieters und ein Verfahren zum Anmelden des Abnehmers für eine Inanspruchnahme des wenigstens einen Dienstes des Dienstanbieters. Ferner betrifft die Erfindung ein System zum Anmelden eines Abnehmers bei einem Dienstanbieter.

Bei einem bekannten Verfahren gibt ein Dienstanbieter an einen Abnehmer des Dienstes eine Speicherkarte aus, in der Kundendaten gespeichert sind, die den Abnehmer betreffen. Diese Kundendaten enthalten Informationen, anhand derer sich ermitteln läßt, ob der Abnehmer einen angebotenen Dienst des Dienstanbieters in Anspruch nehmen darf. Ferner enthalten die Kundendaten Informationen über den Abnehmer selbst wie etwa seine Anschrift oder seine Bankverbindung. Zur Inanspruchnahme des angebotenen Dienstes meldet sich der Abnehmer bei dem Dienstanbieter an, indem er die Karte mit den Kundendaten in ein Lesegerät einführt. Üblicherweise ist dieses Lesegerät Bestandteil einer sogenannten Set-Top-Box, die von einer Dienststation des Dienstanbieters an die Set-Top-Box übertragene Daten des Dienstes entschlüsselt. Das Lesegerät liest die in der Speicherkarte gespeicherten Kundendaten und überträgt sie durch eine Datenleitung, etwa eine Telefonleitung, an die Dienststation des Dienstanbieters. Bei der Dienststation des Dienstanbieters wird anhand der übertragenen Kundendaten ermittelt, ob der Abnehmer zur Inanspruchnahme des angebotenen Dienstes, insbesondere zum Empfang von Daten des gewählten Dienstes berechtigt ist. Sofern der Abnehmer zum Empfang von Daten des gewählten Dienstes berechtigt ist, wird der Anmeldungsvorgang abgeschlossen und ein Produktschlüssel, der zum Entschlüsseln von Kontrollworten vorgesehen ist, mit denen die Daten des gewählten Dienstes verschlüsselt sind, wird von der Dienststation an die Set-Top-Box des Abnehmers übertragen.

Das bekannte Verfahren hat den Nachteil, dass einem raschem Wechsel von einem ersten zu einem zweiten Dienst dadurch enge Grenzen gezogen sind, dass die Zahl der an der Set-Top-Box installierbaren Kartenleser aus praktischen Gründen begrenzt ist. Somit kann nur eine geringe Anzahl von Speicherkarten gleichzeitig in der Set-Top-Box vorgehalten werden, um jederzeit einen Zugriff auf die in der jeweiligen Speicherkarte gespeicherten Kundendaten zu ermöglichen. Wählt der Abnehmer einen Dienst, ohne dass eine zugeordnete Speicherkarte des Anbieters dieses Dienstes mit den Kundendaten des Abnehmers in einem der Lesegeräte eingeführt ist, so muss der Abnehmer zunächst eine der eingeführten Speicherkarten aus dem Lesegerät der Set-Top-Box herausnehmen, um die Speicherkarte mit den abnehmerbezogenen Kundendaten für den gewählten Dienst in den nunmehr freigewordenen Leseschlitz an der Set-Top-Box einführen können. Dieses Vorgehen ist umständlich.

Theoretisch können die in allen Speicherkarten gespeicherten abnehmerbezogenen Kundendaten in einer hinreichend großen Speichereinheit der Set-Top-Box gespeichert werden. Praktisch kommt eine derartige Lösung jedoch nicht in Frage: Auf die in der Set-Top-Box gespeicherten Kundendaten könnte nämlich der Anbieter der Set-Top-Box frei zugreifen. Üblicherweise ist dieser Anbieter der Set-Top-Box zugleich ein Dienstanbieter und steht im Wettbewerb mit anderen Dienstanbietern. Die Kundendaten sind für jeden Dienstanbieter von einer besonders großen wirtschaftlichen Bedeutung, so dass für den Dienstanbieter eine Speicherung in der Set-Top-Box des Mitbewerbers inakzeptabel ist.

In der US 5,530,232 ist eine Vielfunktionskarte mit einer Speichereinheit offenbart, die mehrere Karten ersetzen kann, die nur eine einzige Anwendung haben. Zu diesem Zweck sind an einem Ort, der von einem Einsatzort der Vielfunktionskarte entfernt sein kann, mehrere Speichereinheiten eingerichtet, in denen jeweils Kundendaten zu einem Benutzer der Vielfunktionskarte gespeichert sind, die jeweils eine der Anwendungen betreffen. Eine zusätzliche Speichereinheit ist auf der Vielfunktionskarte eingerichtet und weist Kundendaten auf, die jedermann zugänglich sind. Zur Verwendung der Vielfunktionskarte führt der Benutzer die Vielfunktionskarte in ein Lesegerät am Einsatzort der Vielfunktionskarte ein. Das Lesegerät erstellt eine Verbindung mit der gegebenenfalls von dem Einsatzort entfernten Speichereinrichtung. Der Benutzer wählt eine der mehreren Anwendungen zu denen Kundendaten in einer der mehreren Speichereinheiten der Vielfunktionskarte gespeichert sind. Nach einer Prüfung der Berechtigung des Benutzers anhand der gespeicherten Kundendaten wird die gewählte Anwendung durchgeführt. Diese Vielfunktionskarte hat jedoch den Nachteil, daß der Anbieter der Vielfunktionskarte auf die Kundendaten zugreift und diese Daten sogar verarbeitet, um eine gewählte Anwendung durchzuführen, so daß eine Sicherheit vor einem unbefugten Zugriff nicht gewährleistet ist.

Der Erfindung liegt die Aufgabe zugrunde, ein Verfahren zur Inanspruchnahme eines Dienstes eines von mehreren Dienstanbietern durch einen Abnehmer anzugeben, bei dem abnehmerbezogene Daten, d. h. Kundendaten, die jeder Dienstanbieter nach seinen Bedürfnissen bezüglich des Abnehmers speichert, besonders sicher vor einem Zugriff jedes weiteren Dienstanbieters geschützt sind. Ferner liegt der Erfindung die Aufgabe zugrunde, eine Vorrichtung zur Inanspruchnahme eines Dienstes eines von mehreren Dienstanbietern durch einen Abnehmer anzugeben, bei dem Kundendaten, die jeder Dienstanbieter nach seinen Bedürfnissen bezüglich des Abnehmers speichert, besonders sicher vor einem Zugriff jedes weiteren Dienstanbieters geschützt sind.

Die Erfindung löst die Aufgabe mit einem Verfahren zum Registrieren eines Abnehmers für eine Inanspruchnahme wenigstens eines Dienstes eines Dienstanbieters durch den Abnehmer, mit den Schritten:
(a) Übertragen von Registrierungsdaten von dem Abnehmer an einen Metadienstanbieter, wobei die Registrierungsdaten erste Identifikationsdaten aufweisen und wobei die Registrierungsdaten ferner wenigstens Dienstanmeldedaten aufweisen, um den Abnehmer bei dem Dienstanbieter für den Dienst anzumelden, die den Identifikationsdaten fest zugeordnet sind; und
(b) Speichern der Registrierungsdaten bei dem Metadienstanbieter.
   Dieses Verfahren stellt eine Initialisierung dar, bei der eine Voraussetzung geschaffen wird, um ein zweites, nachfolgend erläutertes Verfahren gemäß der Erfindung anzuwenden, sooft der Abnehmer einen Dienst in Anspruch zu nehmen wünscht. Die Erfindung löst die Aufgabe nämlich ferner mit einem Verfahren zum Anmelden eines Abnehmers für eine Inanspruchnahme wenigstens eines Dienstes eines Dienstanbieters, mit den Schritten:
(c) Übertragen von Abnehmerdaten von dem Abnehmer an einen Metadienstanbieter, wobei die Abnehmerdaten zweite Identifikationsdaten aufweisen, die zum Vergleich mit bei dem Metadienstanbieter gespeicherten ersten Identifikationsdaten vorgesehen sind, und wobei die Abnehmerdaten ferner Wahldaten aufweisen, um einen Dienst zu wählen, für den der Abnehmer bei dem Metadienstanbieter registriert ist; und
(d) Übertragen von Dienstanmeldedaten des den Wahldaten entsprechenden Dienstes von dem Metadienstanbieter an den Dienstanbieter des gewählten Dienstes, um den Abnehmer bei dem Dienstanbieter für den gewählten Dienst anzumelden, sofern die zweiten Identifikationsdaten mit den ersten Identifikationsdaten soweit übereinstimmen, daß eine Zuordnung der Identifikationsdaten zu den Dienstanmeldedaten erkennbar ist.

"Dienst" umfaßt audio/visuelle Daten wie etwa einen Film, eine Fernsehschau oder einen Dokumentarbericht, Textdaten wie etwa ein elektronisches Magazin, eine Zeitung oder einen Wetterbericht, Computerprogramme wie etwa ein Computerspiel oder ein Börseninvestionsprogramm, binäre Daten wie etwa Bilddaten, oder ferner Dateien, die in einer Auszeichnungssprache ausgezeichnet sind wie etwa HTML-Dateien.

Die erfindungsgemäßen Verfahren haben den Vorteil, dass die Dienstanmeldedaten, insbesondere darin enthaltene Kundendaten, jedes Dienstanbieters einem Zugriff durch einen jeweils anderen Dienstanbieter entzogen sind. Somit sind insbesondere die Kundendaten, die für jeden Dienstanbieter sehr bedeutsam sind, besonders sicher vor einem Zugriff durch einen Mitbewerber. Zugleich sind die Verfahren sehr benutzerfreundlich, da der Abnehmer im wesentlichen nur die zweiten Identifikationsdaten vorhalten muß.

Die vorteilhafte Wirkung der erfindungsgemäßen Verfahren zeigt sich insbesondere, wenn sie miteinander kombiniert sind. Bei dieser Ausführungsform bilden sie gemeinsam ein einziges Verfahren, das eine Initialisierungsphase und eine Anmeldungsphase aufweist. Der Abnehmer führt die Initialisierungsphase einmal durch, um sich für einen gewünschten Dienst bei dem Metadienstanbieter zu registrieren. Anschließend, möglicherweise in zeitlichem Abstand zu der Initialisierungsphase führt der Abnehmer die Anmeldungsphase durch, sooft er einen Dienst in Anspruch nehmen möchte, für den er bei dem Metadienstanbieter registriert ist. Das erfindungsgemäße Verfahren ist besonders vorteilhaft bei einer Inanspruchnahme eines interaktiven Dienstes einsetzbar wie etwa bei Inanspruchnahme eines Internet-Zugangsdienstes, wenn - etwa im Unterschied zu einem Digitalfernsehdienst - der Dienstanbieter des interaktiven Dienstes nicht alle zur Entschlüsselung notwendigen Daten im Datenstrom mitsendet.

Bei einer Ausführungsform überträgt der Metadienstanbieter die Dienstanmeldedaten des Abnehmers verschlüsselt an den Abnehmer. Dies hat den Vorteil, dass dem Betreiber des Zugriffmoduls der Inhalt der Dienstanmeldedaten auch dann verborgen bleibt, wenn er auf die verschlüsselten Dienstanmeldedaten zugreifen kann. Bei einer Ausführungsform bildet der Metadienstanbieter einen Sitzungsschlüssel etwa anhand von klar oder unverschlüsselt lesbaren Identifikationsdaten, die den Dienstanmeldedaten zugeordnet sind. Mittels des Sitzungsschlüssels werden die Dienstanmeldedaten zur Übertragung verschlüsselt. Bevorzugt überträgt der Metadienst die Dienstanmeldedaten des Abnehmers in einem Datenstrom mit zusätzlichen Daten an den Abnehmer derart, dass die Position der Dienstanmeldedaten in dem Datenstrom unkenntlich ist. Bei dieser Ausführungsform bleibt dem Betreiber des Zugriffsmoduls ein Zugriff auf die Dienstanmeldedaten deshalb verwehrt, weil er die Position dieser Daten in dem Datenstrom von dem Metadienst nicht kennen kann.

Bevorzugt werden bei Schritt (d) die Dienstanmeldedaten unmittelbar von dem Metadienstanbieter an den Dienstanbieter übertragen. Anschließend initiiert der Dienstanbieter eine Übertragung des Dienstes an den Abnehmer. Diese Ausführungsform des Verfahrens gewährt einen besonders großen Schutz vor einem Zugriff auf die Dienstanmeldedaten durch einen unbefugten Dritten, weil die Dienstanmeldedaten, wenn sie einmal bei dem Metadienstanbieter gespeichert sind, nicht mehr an den Abnehmer, insbesondere nicht an ein Zugriffsmodul des Abnehmers geleitet werden, das gegebenenfalls von einem Mitbewerber des Dienstanbieters bereitgestellt ist und betrieben wird. Somit sind diese Dienstanmeldedaten insbesondere dem Betreiber des Zugriffmoduls endgültig entzogen.

Besonders bevorzugt sind die Dienstanmeldedaten derart ausgebildet, daß dem Metadienstanbieter ein Inhalt der Daten verborgen bleibt. Beispielsweise sind die Dienstanmeldedaten verschlüsselt. Insbesondere bleibt dem Metadienstanbieter ein Abschnitt der Dienstanmeldedaten mit Kundendaten verborgen, so daß der Metadienstanmelder den Inhalt der Kundendaten nicht kennt. Bei dieser Ausführungsform kann der Metadienstanbieter ein gewöhnlicher Dienstanbieter sein, der mit den übrigen Dienstanbietern, deren Dienstanmeldedaten bei dem Metadienstanbieter gespeichert werden, in einem Wettbewerbsverhältnis steht.

Bei einer bevorzugten Ausführungsform des Verfahrens gibt der Dienstanbieter ein Speichermittel an den Abnehmer aus. In diesem Speichermittel sind die ersten bzw. die zweiten Identifikationsdaten des Abnehmers gespeichert. Beispielsweise handelt es sich bei den Identifikationsdaten um eine Identifikationsnummer. Besonders bevorzugt ist eine Ausführungsform des Verfahrens, bei der der Metadienstanbieter aus der Identifikationsnummer keinen Schluss auf die Identität des Abnehmers ziehen kann, so dass auch die Dienstanmeldedaten, die bei dem Metadienstanbieter gespeichert sind, nicht in Bezug zu dem Abnehmer zu bringen sind, wenn der Metadienst die Zuordnung der Identifikationsdaten zu den Dienstanmeldedaten erkennt.

Das Speichermittel ist bevorzugt als Speicherkarte ausgebildet. Diese Ausführungsform ermöglicht dem Abnehmer eine besonders einfache Sicherung der Identifikationsdaten. Der Abnehmer verhindert einen möglichen Missbrauch etwa im Falle eines Diebstahles des Zugriffmoduls, indem er die Speicherkarte aus dem Zugriffsmodul entfernt, wenn er den Dienst nicht in Anspruch nimmt. Ganz besonders bevorzugt ist eine Ausführungsform, bei der der Abnehmer die Identifikationskarte wie einen Schlüssel verwendet, d. h. dass er die Identifikationskarte nur dann in das Zugriffsmodul einführt, wenn er einen Wechsel des in Anspruch zu nehmenden Dienstes vollzieht. Bei einer Ausführungsform werden die Identifikationsdaten in dem Zugriffsmodul für eine vorgegebene Dauer zwischengespeichert, so dass die Speicherkarte während der Dauer des Zwischenspeicherns nicht in das Zugriffsmodul eingesteckt sein muss. Nach Ablauf der vorgegebenen Zeitdauer werden die Identifikationsdaten aus dem Speicher des Zugriffmoduls automatisch gelöscht. Bei dieser Ausführungsform ist das erfindungsgemäße Verfahren ganz besonders benutzerfreundlich, weil der Abnehmer während der vorgegebenen Zeitdauer den in Anspruch zu nehmenden Dienst wechseln kann, ohne die Speicherkarte zu verwenden.

Bei einer anderen Ausführungsform gibt der Dienstanbieter an den Abnehmer eine persönliche Identifikationsnummer (PIN) aus. Der Abnehmer registriert die persönliche Identifikationsnummer bei dem Metadienstanbieter zur Identifikation als Nutzer des Dienstes. Der Metadienstanbieter fragt diese persönliche Identifikationsnummer gesondert und zusätzlich zu den übertragenen zweiten Identifikationsdaten ab, wenn der Abnehmer einen Dienst auswählt. Bei dieser Ausführungsform ist gewährleistet, dass nur derjenige Abnehmer den Dienst in Anspruch nehmen kann, der die persönliche Identifikationsnummer kennt. Dies kann etwa im Falle eines Haushaltes mit minderjährigen Mitgliedern vorteilhaft sein, wenn ihnen mangels Kenntnis der persönlichen Identifikationsnummer eine Inanspruchnahme eines Dienstes verwehrt bleiben soll, der zum ausschließlichen Genuss durch Erwachsene vorgesehen ist. Bei einer anderen Ausführungsform ist die PIN ein Bestandteil der Dienstanmeldedaten. Bei noch einer anderen Ausführungsform muß der Anmelder die PIN dem Dienstanbieter übermitteln, bevor er den Dienst in Anspruch nehmen kann.

Die Erfindung löst die zweite Aufgabe mit einem System zum Anmelden eines Abnehmers bei einem Dienstanbieter, mit einem Zugriffsmodul, das bei dem Abnehmer angeordnet ist und eine Sende- und Empfangseinrichtung zum Anschluss an einen ersten Übertragungsweg zum Übertragen von Identifikationsdaten und von Wahldaten und zum Empfangen von Daten eines Dienstes sowie ein Mittel zum Eingeben der Identifikationsdaten und ein Mittel zum Eingeben der Wahldaten aufweist, einer Metadienststation, die mit der Sende- und Empfangseinrichtung des Zugriffsmoduls durch den ersten Übertragungsweg zur Übertragung von Identifikationsdaten verbindbar ist und die ein Speichermittel zum Speichern von ersten Identifikationsdaten sowie zum Speichern von Dienstanmeldedaten des Abnehmers aufweist, und wenigstens einer Dienststation, die mit der Sende- und Empfangseinrichtung des Zugriffsmoduls des Abnehmers durch einen zweiten Übertragungsweg zum Übertragen von Daten des Dienstes verbindbar ist.

Dieses System ermöglicht eine besonders sichere Speicherung von Dienstanmeldedaten des Abnehmers, insbesondere außerhalb eines Zugriffs durch einen Betreiber des Zugriffsmoduls. Ein Dienstanbieter muss deshalb nicht befürchten, dass ein unbefugter Dritter, etwa der Betreiber des Zugriffmoduls, auf die Kundendaten des Dienstanbieters zugreift.

Bevorzugt ist die Metadienststation durch einen dritten Übertragungsweg unmittelbar mit der Dienststation verbindbar. Bei dieser Ausführungsform sind die Dienstanmeldedaten direkt an die Dienststation übertragbar, so dass sie nicht durch das Zugriffsmodul des Abnehmers geleitet werden müssen und somit einem Zugriff durch den Betreiber dieses Zugriffsmoduls vollständig entzogen sind.

Bevorzugt ist das Mittel zum Eingeben der Identifikationsdaten als Kartenlesegerät an dem Zugriffsmodul ausgebildet, das die Identifikationsdaten von einer Speicherkarte liest. Das Kartenlesegerät erlaubt eine besonders benutzerfreundliche Durchführung des erfindungsgemäßen Verfahrens, weil eine manuelle Eingabe der Identifikationsdaten nicht erforderlich ist. Stattdessen kann der Speicherkarte mit den Identifikationsdaten die Funktion etwa eines Schlüssels zukommen, den der Benutzer einsetzt, wenn er einen Dienst in Anspruch nimmt.

Die Erfindung löst die zweite Aufgabe ferner mit einem Zugriffsmodul, das bei einem Abnehmer wenigstens eines Dienstes eines Dienstanbieters angeordnet ist. Dieses Zugriffsmodul weist eine Sende- und Empfangseinrichtung zum Anschluss an einen ersten Übertragungsweg für eine Übertragung von Identifikationsdaten und Wahldaten insbesondere an eine Metadienststation auf. Das Zugriffsmodul weist außerdem ein Mittel zum Eingeben der Identifikationsdaten und ein Mittel zum Eingeben der Wahldaten auf. Die Sende- und Empfangseinrichtung des Zugriffsmoduls ist zum Empfang von Daten eines Dienstes ausgebildet. Bei einer Ausführungsform ist die Sende- und Empfangseinrichtung ferner zum Anschluss an einen zweiten Übertragungsweg zur Übertragung von Dienstanmeldedaten an die Dienststation vorgesehen. Das Mittel zum Eingeben der Identifikationsdaten und das Mittel zum Eingeben der Wahldaten kann als eine einzige Eingabeeinheit, etwa als Eingabetastatur, Spielstange (Joystick) oder Führungskugel (Trackball), ausgebildet sein.

Die Erfindung löst die Aufgabe außerdem mit einer Metadienststation zum Registrieren wenigstens eines Abnehmers wenigstens eines Dienstes eines Dienstanbieters. Diese Metadienststation weist eine Sende- und Empfangseinrichtung auf, die mit einem Zugriffsmodul des Abnehmers durch einen ersten Übertragungsweg zum Empfangen von Identifikationsdaten, Dienstanmeldedaten oder Wahldaten verbindbar ist. Ferner weist die Metadienststation ein Speichermittel zum Speichern von ersten Identifikationsdaten sowie zum Speichern der Dienstanmeldedaten des Abnehmers auf. Die Sende- und Empfangseinrichtung der Metadienststation ist bei einer Ausführungsform zum Anschluß an einen weiteren Übertragungsweg zu einer Dienststation vorgesehen.

Die Erfindung löst die zweite Aufgabe ferner mit einer Dienststation zum Bereitstellen von Daten eines Dienstes an einen Abnehmer, die mit einer Sendeund Empfangseinrichtung eines Zugriffsmoduls des Abnehmers durch einen Übertragungsweg einen ersten Übertragungsweg zum Übertragen von Dienstanmeldedaten oder der Daten des Dienstes verbindbar ist. Bei einer Ausführungsform ist die Sende- und Empfangseinrichtung der Dienststation durch einen weiteren Übertragungsweg mit einer Metadienststation verbindbar, um unmittelbar von der Metadienststation Dienstanmeldedaten zu empfangen.

Nachfolgend wird ein Ausführungsbeispiel der Erfindung anhand der Figuren näher erläutert. Es zeigen:
- Fig. 1: ein erfindungsgemäßes System zum Registrieren eines Abnehmers für einen Dienst eines Dienstanbieters bei einem Metadienstanbieter;
- Fig. 2: eine schematische Darstellung eines Ablaufs eines erfindungsgemäßen Verfahrens zum Anmelden eines Abnehmers bei dem Metadienstanbieter; und
- Fig. 3: eine schematische Darstellung einer Zuordnung von Identifikationsdaten zu Dienstanmeldedaten gemäß der Erfindung.

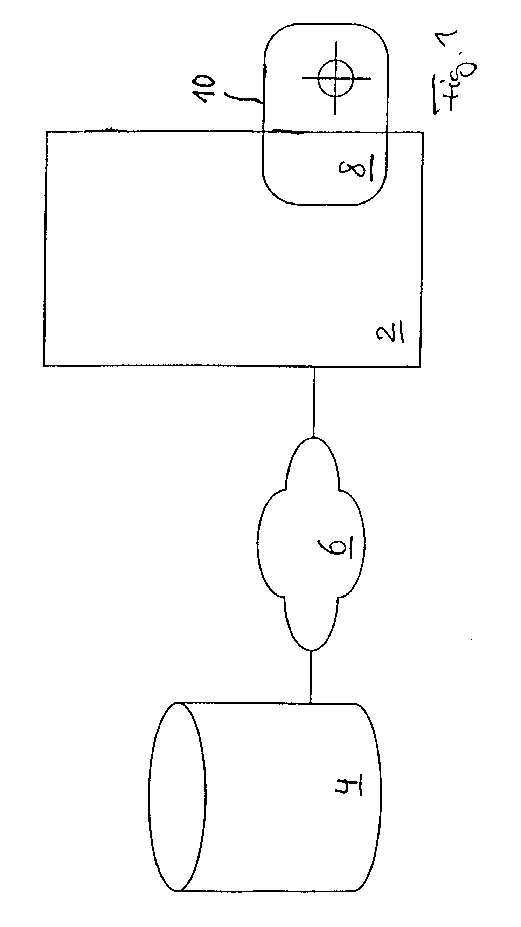

Das in Fig. 1 dargestellte System weist ein Zugriffsmodul 2 und eine Metadienststation 4 auf, die miteinander durch einen Übertragungsweg 6 verbindbar sind. Der Übertragungsweg ist beispielsweise als eine Telefonleitung ausgebildet. Das Zugriffsmodul 2 weist ein Kartenlesegerät 8 auf. Das Kartenlesegerät 8 nimmt eine Speicherkarte 10 auf, die als eine sogenannte Smart-Card ausgebildet ist. Die Metadienststation 4 weist eine nicht dargestellte Speichereinrichtung zur Aufnahme einer Identifikationsnummer einer Speicherkarte 10 sowie zur Aufnahme abnehmerbezogener Daten auf, die für eine Inanspruchnahme wenigstens eines Dienstes als Dienstanmeldedaten erforderlich sind. Diese abnehmerbezogenen Daten stellen für den Anbieter des jeweiligen Dienstes wertvolle Kundendaten dar. Die abnehmerbezogenen Daten sind derart formatiert, dass ihr Inhalt bei der Metadienststation 4 weder für einen Betreiber der Metadienststation 4, d. h. den Metadienstanbieter, noch für einen unbefugten Dritten erkennbar ist. Beispielsweise sind die Daten verschlüsselt.

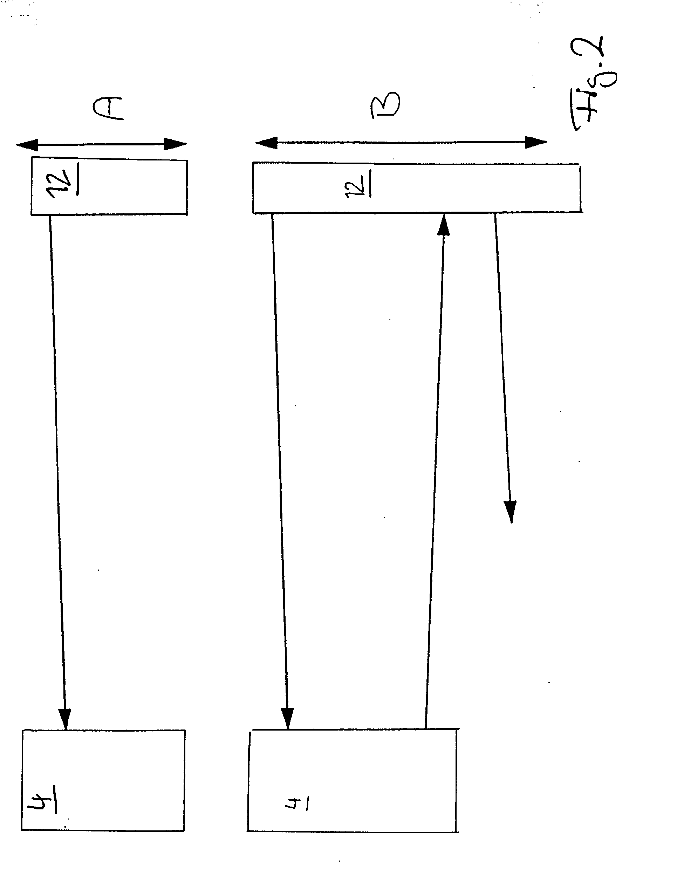

Das erfindungsgemäße Verfahren wird in zwei Phasen A und B vollzogen, die in Fig. 2 schematisch dargestellt sind. Während einer ersten Phase A wird das System zur Inanspruchnahme eines Dienstes durch einen Abnehmer 12 initialisiert. Der Abnehmer 12 veranlasst eine Verbindung des Zugriffsmoduls 2 durch den Übertragungsweg 6 mit der Metadienststation 4. Wenn die Verbindung aufgebaut ist, überträgt der Abnehmer 12 von dem Zugriffsmodul 2 Registrierungsdaten an die Metadienststation 4, wie es in der Fig. 2 mit einem ersten Pfeil oben angedeutet ist. Die Registrierungsdaten weisen die Identifikationsnummer der Speicherkarte 10 auf. Ferner weisen die Registrierungsdaten die abnehmerbezogenen Daten auf, die zur Inanspruchnahme des Dienstes erforderlich sind, d. h. insbesondere die Dienstanmeldedaten für den Dienst. Außerdem weisen die Registrierungsdaten eine Dienstkennung auf, um die abnehmerbezogenen Daten jedes einzelnen Dienstes zu kennzeichnen. Somit ist der Abnehmer 12 bei der Metadienststation 4 für den gekennzeichneten Dienst registriert, und die erste Phase des Verfahrens wird abgeschlossen, indem die Verbindung zwischen dem Zugriffsmodul 2 und der Metadienststation 4 unterbrochen wird.

Während der zweiten Phase B des erfindungsgemäßen Verfahrens baut der Abnehmer 12 wiederum eine Verbindung von dem Zugriffsmodul 2 durch den Übertragungsweg 6 zu der Metadienststation 4 auf. Bei einer Ausführungsform kann der Übertragungsweg ein anderer sein, als derjenige, der während der Phase A zur Initialisierung gewählt wurde. Beispielsweise kann in Phase A eine Telefonverbindung aufgebaut werden; in Phase B dagegen eine Internetverbindung.

Der Abnehmer 12 führt die Speicherkarte 10 in das Lesegerät 8 des Zugriffsmoduls 2 ein. Das Zugriffsmodul 2 überträgt die Identifikationsnummer der Speicherkarte 10 durch den Übertragungsweg an die Metadienststation 4. Dies ist in der Fig. 2 mit einem weiteren Pfeil von dem Abnehmer 12 zu der Metadienststation 4 angedeutet. Die Metadienststation 4 vergleicht die empfangene Identifikationsnummer der Speicherkarte 10 mit den bei der Metadienststation 4 gespeicherten Identifikationsnummern, insbesondere mit der von dem Abnehmer 12 während der Initialisierungsphase A empfangenen Identifikationsnummer der Speicherkarte 10. Bei einer Übereinstimmung der empfangenen Identifikationsnummer mit der gespeicherten Identifikationsnummer ermittelt die Metadienststation 4 die abnehmerbezogenen Daten, die der während der Initialisierungsphase A empfangenen Identifikationsnummer zugeordnet sind.

Die Metadienststation 4 fordert den Abnehmer 12 zur Eingabe von Wahldaten auf, um einen bestimmten Dienst auszuwählen. Der Abnehmer 12 gibt die Wahldaten ein, etwa die Dienstkennung des gewünschten Dienstes, und die Wahldaten werden von dem Zugriffsmodul 2 an die Metadienststation 4 übertragen. Dies ist in Fig. 2 nicht dargestellt. Die Metadienststation 4 greift auf die mit der in den Wahldaten enthaltenen Dienstkennung gekennzeichneten abnehmerbezogenen Daten in der Speichereinrichtung zu und überträgt diese Daten von der Speichereinrichtung durch den Übertragungsweg 6 an das Zugriffsmodul 2 bei dem Abnehmer 12, wie es in der Fig. 2 mittels des unteren Pfeils von der Metadienststation 4 zu dem Abnehmer 12 angedeutet ist. Dabei erfolgt seitens der Metadienststation 4 keinerlei Verarbeitung der abnehmerbezogenen Daten oder gar eine Analyse hinsichtlich des Inhalts dieser Daten. Der Abnehmer 12 baut eine Verbindung von dem Zugriffsmodul 2 durch einen zweiten Übertragungsweg zu einer Dienststation auf; dies ist in Fig. 2 durch den untersten Pfeil angedeutet, wobei die Dienststation jedoch nicht dargestellt ist. Die abnehmerbezogenen Daten werden ohne weiteres von dem Zugriffsmodul 2 durch den zweiten Übertragungsweg an die Dienststation übertragen. Bei der Dienststation werden die abnehmerbezogenen Daten verarbeitet und dabei einer Analyse hinsichtlich der Nutzungsberechtigung des Abnehmers bezüglich des den abnehmerbezogenen Daten zugeordneten Dienstes unterzogen.

Bevorzugt ist eine Ausführungsform, bei der die Metadienststation 4 vor Abschluss der ersten Phase A des erfindungsgemäßen Verfahrens an den Abnehmer 12 eine persönliche Identifikationsnummer (PIN) überträgt. Die Übertragung dieser PIN kann von der Metadienststation 4 durch den Übertragungsweg 6 an das Zugriffsmodul 2 erfolgen, so dass die PIN für den Abnehmer 12 etwa auf einem an das Zugriffsmodul 2 angeschlossenen Bildschirmgerät darstellbar ist. Alternativ übertragt die Metadienststation 4 die PIN auf einem Postweg an den Abnehmer 12, indem sie die PIN ausdruckt und in einem verschlossenem Umschlag verschickt. Während der zweiten Phase des erfindungsgemäßen Verfahrens fordert die Metadienststation 4 den Abnehmer 12 zur Eingabe der PIN auf, nachdem die Metadienststation 4 die Identifikationsnummer der Speicherkarte 10 empfangen hat. Der Abnehmer 12 gibt etwa mittels einer an das Zugriffsmodul 2 angeschlossenen Eingabeeinrichtung die PIN ein, und die PIN wird von dem Zugriffsmodul 2 durch den Übertragungsweg 6 an die Metadienststation 4 übertragen. Die Metadienststation 4 vergleicht die empfangene PIN mit der bezüglich der Identifikationsnummer der Speicherkarte 10 bei der Metadienststation 4 gespeicherten PIN. Bei einer Ausführungsform des erfindungsgemäßen Verfahrens können auch mehrere PIN bezüglich einer Speicherkarte in der Speichereinrichtung der Metadienststation 4 gespeichert sein. Dies ist sinnvoll, wenn etwa verschiedene Mitglieder eines Haushaltes mit einer Speicherkarte 10 unterschiedliche Zugangsberechtigungen zu den bezüglich der Speicherkarte 10 registrierten Diensten haben sollen. Bei einer Übereinstimmung der PIN mit der bezüglich der Identifikationsnummer der Speicherkarte 10 gespeicherten PIN fordert die Metadienststation 4 den Abnehmer 12 in der oben beschrieben Weise zur Eingabe von Wahldaten auf. Bei einer anderen Ausführungsform des Verfahrens ist die PIN zur Abfrage durch die Dienststation vorgesehen. Bei dieser Ausführungsform kann die PIN derart Bestandteil der abnehmerbezogenen Daten sein, dass die Metadienststation 4 die PIN nicht erkennt. Bei einer Ausführungsform kann die PIN zusammen mit einer zusätzlichen Identifikationsnummer des Benutzers, etwa der Identifikationsnummer der Speicherkarte 10, in die Verschlüsselung mit einbezogen werden. Die PIN ist zur Mitwirkung bei einer Erzeugung eines sogenannten Sitzungsschlüssels zum Verschlüsseln aller Nachrichten während einer Sitzung oder während der Dauer der Inanspruchnahme des Dienstes vorgesehen. Bei dieser Ausführungsform ist eine Übertragung der PIN entbehrlich.

Bei einer Ausführungsform des Verfahrens erfolgt die Übertragung der anmelderbezogenen Daten während der Phase A folgendermaßen: Nachdem die Metadienststation 4 die Identifikationsnummer der Speicherkarte 10 empfangen hat, fordert die Metadienststation 4 den Abnehmer 12 dazu auf, nunmehr die anmelderbezogenen Daten zur Übertragung bereitzustellen. Der Anmelder 12 entfernt die Speicherkarte 10 aus dem Lesegerät 8 des Zugriffsmoduls 2 und führt eine Speicherkarte in 10' das Lesegerät 8 ein, die von dem Dienstanbieter des in Anspruch zu nehmenden Dienstes an den Abnehmer 12 ausgegeben ist und auf der die abnehmerbezogenen Daten gespeichert sind. Das Lesegerät 8 liest von der Speicherkarte 10' die abnehmerbezogenen Daten und diese Daten werden von dem Zugriffsmodul 2 durch den Übertragungsweg 6 an die Metadienststation 4 übertragen. Bei einer Ausführungsform weist das Zugriffsmodul wenigstens ein zweites Lesegerät 8' auf. Bei dieser Ausführungsform entfällt ein Erfordernis, die erste Speicherkarte 10, auf der die Identifikationsnummer gespeichert ist, aus dem Lesegerät 8 zu entnehmen. Die zweite Speicherkarte 10' mit den abnehmerbezogenen Daten des in Anspruch zu nehmenden Dienstes wird einfach in das zweite Lesegerät 8' eingeführt, so dass das Zugriffsmodul 2 diese Daten mittels des zweiten Lesegerätes 8' von der zweiten Speicherkarte 10' liest.

Vorzugsweise fordert die Metadienststation 4 während der ersten Phase A des Verfahrens den Abnehmer 12 zum Abschluss der Initialisierung dazu auf, die Speicherkarte 10 sowie gegebenenfalls die Speicherkarte 10' aus dem Lesegerät 8 sowie ggf. aus dem Lesegerät 8' zu entfernen.

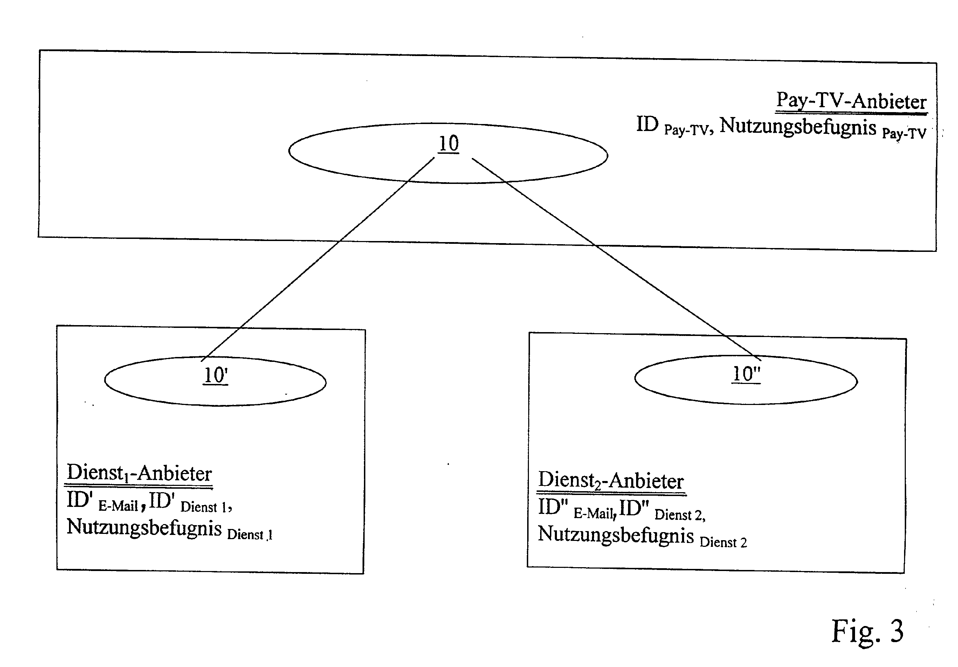

In Fig. 3 ist schematisch dargestellt, wie bei der Metadienststation 4 anhand der Identifikationsnummer der Speicherkarte 10 eine Zuordnung zu den in der Speichereinrichtung des der Metadienststation 4 gespeicherten Daten erfolgt. Die Metadienststation 4 wird dabei von einem Anbieter eines gebührenpflichtigen Fernsehkanals (Pay-TV-Anbieter) betrieben. Der Betreiber der Metadienststation 4 hat die Speicherkarte 10 an den Abnehmer 12 ausgegeben. Auf der Speicherkarte 10 sind die Identifikationsnummer (ID_{Pay-TV}) der Speicherkarte 10 sowie Informationen über die Nutzungsberechtigung des Abnehmers 12, etwa eine Nutzung eines abonnierten Pay-TV Programmes, gespeichert. Während der ersten Phase A des Verfahrens, d. h. wenn etwa der Abnehmer einen Dienst bei der Metadienststation registriert, wird die Identifikationsnummer der Speicherkarte 10 in der Speichereinrichtung der Metadienststation 4 gespeichert.

Der Dienstanbieter, beispielsweise ein erster E-mail-Anbieter, hat an den Abnehmer 12 die zweite Speicherkarte 10' ausgegeben. Auf der zweiten Speicherkarte 10' ist eine Kartennummer (ID'_{E-mail}) dieser zweiten Speicherkarte 10' gespeichert. Ferner sind eine Kennnummer (ID'_{Dienst 1}) für den ersten E-mail-Dienst sowie eine Dienstnutzungsbefugnis bezüglich des ersten E-mail-Dienstes des Abnehmers 12 auf der zweiten Speicherkarte 10' gespeichert. Während der ersten Phase A des Verfahrens, d. h. wenn der Abnehmer 12 den ersten E-mail-Dienst bei dem Metadienstanbieter 4 registriert, werden die Kartennummer (ID'_{E-mail}) der zweiten Speicherkarte 10', die Kennnummer des ersten E-mail-Dienstes (ID'_{Dienst 1}) sowie die Dienstnutzungsbefugnis bezüglich des ersten E-mail-Dienstes in der Speichereinrichtung der Metadienststation 4 gespeichert. Diese Daten liegen dabei in einem Datensatz vor, dessen Format so gewählt ist, dass der Inhalt des Datensatzes, insbesondere die abnehmerbezogenen Daten, d. h. die Kundendaten, der Metadienststation 4 nicht erkennbar ist.

Bei der in Fig. 3 dargestellten Speicherbelegung hat der Abnehmer 12 zwei Dienste bei der Metadienststation 4 registriert. Ein zweiter Dienstanbieter, etwa ein zweiter E-mail Anbieter, hat an den Abnehmer 12 eine dritte Speicherkarte 10" ausgegeben. Auf dieser Karte ist eine zweite Kartennummer (ID"_{E-mail}) der zweiten Speicherkarte 10" gespeichert. Ferner sind auf der zweiten Speicherkarte 10" eine zweite Kennnummer (ID'_{Dienst 2}) des zweiten E-mail-Dienstes sowie eine Dienstnutzungsbefugnis bezüglich des zweiten E-mail-Dienstes des Abnehmers gespeichert. Wie im Falle der Speicherkarte 10' des ersten E-Mail-Dienstes sind auch im vorliegenden Falle der Speicherkarte 10" des zweiten E-Mail-Dienstes die Daten als Datensatz in der Speichereinrichtung der Metadienststation 4 derart abgelegt, dass der Inhalt dieser Daten, insbesondere der abnehmerbezogenen Daten, d. h. der Kundendaten, bei der Metadienststation 4 nicht erkennbar ist. Die abgelegten Datensätze bezüglich des ersten bzw. des zweiten E-mail-Dienstes sind der Identifikationsnummer (ID_{Pay-TV}) der ersten Speicherkarte 10 fest zugeordnet und mit der Kennnummer (ID'_{Dienst 1} bzw. ID"_{Dienst 2}) für den jeweiligen Dienst gekennzeichnet.

Wenn der Abnehmer 12 einen der registrierten Dienste nicht weiter beziehen möchte, überträgt er eine entsprechende Information an die Metadienststation 4. Bei der Metadienststation 4 wird die Zuordnung der Identifikationsnummer (ID_{Pay-TV}) der ersten Speicherkarte 10 zu dem mit der Kennnummer des zu streichenden Dienstes gekennzeichneten Datensatz aufgelöst und der Datensatz wird einschließlich der Kennnummer (ID'_{Dienst 1} oder ID"_{Dienst 2}) in der Speichereinrichtung der Metadienststation 4 gelöscht. Bei einer oben beschriebenen Ausführungsform, bei der der Abnehmer 12 eine PIN eingeben muss, bedarf es keiner Löschung der Zuordnung von der Identifikationsnummer der ersten Speicherkarte 10 zu dem Datensatz des zu streichenden Dienstes, wenn der Dienstanbieter dieses zu streichenden Dienstes die PIN einfach ändert, ohne diese Änderung dem Abnehmer 12 mitzuteilen. Selbstverständlich ist die Erfindung auf jeglichen Dienst anwendbar, d. h. beispielsweise, dass auch ein Internet-Zugangsdienst oder ein anderer interaktiver Dienst bei dem Metadienstanbieter 4 registrierbar ist.

## Patentansprüche

1. Verfahren zum Registrieren eines Abnehmers (12) für eine Inanspruchnahme wenigstens eines Dienstes eines Dienstanbieters, mit den Schritten:
(a) Übertragen von Registrierungsdaten von dem Abnehmer (12) an einen Metadienstanbieter, wobei die Registrierungsdaten erste Identifikationsdaten aufweisen und wobei die Registrierungsdaten ferner wenigstens Dienstanmeldedaten aufweisen, um den Abnehmer (12) bei dem Dienstanbieter für den Dienst anzumelden, die den ersten Identifikationsdaten fest zugeordnet sind; und
(b) Speichern der Registrierungsdaten bei dem Metadienstanbieter (4).

2. Verfahren zum Anmelden eines Abnehmers (12) für eine Inanspruchnahme wenigstens eines Dienstes eines Dienstanbieters, mit den Schritten:
(c) Übertragen von Abnehmerdaten von dem Abnehmer (12) an einen Metadienstanbieter, wobei die Abnehmerdaten zweite Identifikationsdaten aufweisen, die zum Vergleich mit bei dem Metadienstanbieter gespeicherten ersten Identifikationsdaten vorgesehen sind, und wobei die Abnehmerdaten ferner Wahldaten aufweisen, um einen Dienst zu wählen, für den der Abnehmer bei dem Metadienstanbieter registriert ist; und
(d) Übertragen von Dienstanmeldedaten des den Wahldaten entsprechenden Dienstes von dem Metadienstanbieter an den Dienstanbieter des gewählten Dienstes, um den Abnehmer (12) bei dem Dienstanbieter für den gewählten Dienst anzumelden, sofern die zweiten Identifikationsdaten mit den ersten Identifikationsdaten soweit übereinstimmen, daß eine Zuordnung der Identifikationsdaten zu den Dienstanmeldedaten erkennbar ist.

3. Verfahren mit den Schritten der Ansprüche 1 und 2.

4. Verfahren nach Anspruch 2 oder 3,
**dadurch gekennzeichnet, daß** bei Schritt (d) der Metadienstanbieter die Dienstanmeldedaten des Abnehmers (12) verschlüsselt an den Abnehmer (12) überträgt.

5. Verfahren nach einem der Ansprüche 2 bis 4,
**dadurch gekennzeichnet, daß** bei Schritt (d) der Metadienstanbieter die Dienstanmeldedaten des Abnehmers (12) in einem Datenstrom mit zusätzlichen Daten an den Abnehmer (12) derart überträgt, daß die Position der Dienstanmeldedaten in dem Datenstrom unkenntlich ist.

6. Verfahren nach Anspruch 2 oder 3,
**dadurch gekennzeichnet, daß** bei Schritt (d) der Metadienstanbieter die Dienstanmeldedaten des Abnehmers (12) unmittelbar an den Dienstanbieter überträgt.

7. Verfahren nach einem der vorstehenden Ansprüche,
**dadurch gekennzeichnet, daß** die Dienstanmeldedaten derart ausgebildet sind, daß dem Metadienstanbieter ein Inhalt dieser Daten verborgen bleibt.

8. Verfahren nach einem der vorstehenden Ansprüche,
**dadurch gekennzeichnet, daß** der Dienstanbieter ein Speichermittel an den Abnehmer (12) ausgibt, in dem die ersten bzw. die zweiten Identifikationsdaten gespeichert sind.

9. Verfahren nach dem vorstehenden Anspruch,
**dadurch gekennzeichnet, daß** das Speichermittel als Speicherkarte (10) ausgebildet ist.

10. Verfahren nach einem der vorstehenden Ansprüche,
**dadurch gekennzeichnet, daß** der Dienstanbieter an den Abnehmer (12) eine persönliche Identifikationsnummer (PIN) ausgibt, die der Abnehmer (12) bei dem Metadienstanbieter zur Identifikation als Nutzer des Dienstes registriert und die der Metadienstanbieter gesondert und zusätzlich zu den übertragenen zweiten Identifikationsdaten abfragt.

11. System zum Anmelden eines Abnehmers bei einem Dienstanbieter, mit
- einem Zugriffsmodul (2), das bei dem Abnehmer (12) angeordnet ist und eine Sende- und Empfangseinrichtung zum Anschluß an einen ersten Übertragungsweg (6) zum Übertragen von Identifikationsdaten und von Wahldaten und zum Empfangen von Daten eines Dienstes sowie ein Mittel zum Eingeben der Identifikationsdaten und ein Mittel zum Eingeben der Wahldaten aufweist,
- einer Metadienststation (4), die mit der Sende- und Empfangseinrichtung des Zugriffsmoduls durch den ersten Übertragungsweg (6) zur Übertragung von Identifikationsdaten verbindbar ist und die ein Speichermittel zum Speichern von ersten Identifikationsdaten sowie zum Speichern von Dienstanmeldedaten des Abnehmers (12) aufweist, und
- wenigstens einer Dienststation, die mit der Sende- und Empfangseinrichtung des Zugriffsmoduls (2) des Abnehmers (12) durch einen zweiten Übertragungsweg zum Übertragen von Daten des Dienstes verbindbar ist.

12. System nach dem vorstehenden Anspruch,
**dadurch gekennzeichnet, daß** die Metadienststation (4) durch einen dritten Übertragungsweg unmittelbar mit der Dienststation verbindbar ist, um Dienstanmeldedaten direkt an die Dienststation zu übertragen.

13. System nach einem der Ansprüche 11 oder 12,
**dadurch gekennzeichnet, daß** das Mittel zum Eingeben der Identifikationsdaten als Kartenlesegerät (8) an dem Zugriffsmodul (2) ausgebildet ist, das die Identifikationsdaten von einer Speicherkarte (10) liest.

14. Zugriffsmodul (2), das bei einem Abnehmer (12) wenigstens eines Dienstes eines Dienstanbieters angeordnet ist, mit einer Sende- und Empfangseinrichtung zum Anschluß an einen ersten Übertragungsweg (6) für eine Übertragung von Identifikationsdaten und Wahldaten an eine Metadienststation (4) sowie zum Anschluß an einen zweiten Übertragungsweg für einen Empfang von Dienstdaten von einer Dienststation sowie gegebenenfalls zur Übertragung von Dienstanmeldedaten an die Dienststation, sowie mit einem Mittel (8) zum Eingeben der Identifikationsdaten und einem Mittel zum Eingeben der Wahldaten.

15. Metadienststation (4) zum Registrieren wenigstens eines Abnehmers (12) wenigstens eines Dienstes eines Dienstanbieters, mit einer Sende- und Empfangseinrichtung, die mit einem Zugriffsmodul (2) des Abnehmers (12) durch einen ersten Übertragungsweg (6) zum Empfang von Identifikationsdaten, Dienstanmeldedaten oder Wahldaten verbindbar ist, und mit einem Speichermittel zum Speichern von ersten Identifikationsdaten sowie zum Speichern von Dienstanmeldedaten des Abnehmers.

16. Dienststation (4) zum Bereitstellen von Daten eines Dienstes an einen Abnehmer (12), die mit einer Sende- und Empfangseinrichtung eines Zugriffsmoduls (2) des Abnehmers durch einen Übertragungsweg zum Übertragen von Dienstanmeldedaten des Abnehmers (12) oder der Daten des Dienstes verbindbar ist.
